# EUROPEAN PATENT SPECIFICATION

(11) **EP 3 335 914 B1**
(45) Date of publication and mention of the grant of the patent: **13.11.2019**
(21) Application number: 16203802.0
(22) Date of filing: 13.12.2016
(51) Int. Cl.: B60F 5/02, B64C 13/04, B64C 13/06, B64C 37/00

(54) **VEHICLE INCLUDING CONTROL PEDAL ARRANGEMENT**
FAHRZEUG MIT STEUERPEDALANORDNUNG
VÉHICULE COMPRENANT UN SYSTÈME DE PÉDALE DE COMMANDE

(43) Date of publication of application: 20.06.2018
(73) Proprietor: AeroMobil R&D, s. r. o., 82106 Bratislava-mestska cast Podunajske Biskupice (SK)
(72) Inventor: MACANDREW, Doug, 841 06 Bystrica (SK); ROOMS, Simon, 841 02 Bratislava (SK); ROACH, Alan, 0788 Oslo (NO); FAZEKAS, Slavomir, 984 01 Lucenec (SK); GREÑ, Martin, 713 00 Ostrava (CZ)
(74) Representative: Finnegan Europe LLP

(56) References cited:
- FR-A3- 2 692 204
- US-A- 4 881 700
- US-A- 5 836 541

## Description

### FIELD OF THE INVENTION

This invention relates to control systems suitable for use on a vehicle configurable for air or road use. Such vehicles are commonly known as flying cars or roadable aircraft (hereafter "flying cars"). In particular, the invention relates to a pedal arrangement for controlling such a vehicle.

### BACKGROUND

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/032409 WO 2016/057003, WO 2016/057004), and the Moller Skycar (http://moller.com/).

One particular issue faced by flying cars is that the standard control inputs for driving and flying are significantly different. For driving, hand control input is used for steering, and foot control for throttle and brake. For flying, hand control is used for pitch (elevator) and roll (aileron), typically using a stick or yoke, and throttle, and foot control for yaw (rudder), and often for differential wheel braking. It is therefore not possible to provide a single set of control inputs that satisfy regulatory requirements for both air and road uses. In addition, the possibility of operator error becomes high if the same input have different uses depending on mode of use.

WO 2016/057003 discloses one proposal for easily shifting between hand control inputs for air and road use. However, this does not address the different foot control inputs.

US 5 836 541 A discloses a control system having three pedals, the central and one side pedal being configured for braking when in road mode and to control a rudder when in air mode. The other side pedal is a gas pedal, only used in road mode, and is not connected to the rudder.

Other proposals, such as the Terrafugia Transition provides a complete set of each inputs: both a steering wheel for road use and stick and hand throttle for air use, and two pairs of pedals, an inner pair for road use (throttle and brake), and an outer pair for rudder (yaw) control. The provision of two set of pedals still leaves the possibility of operator error due to operation of the incorrect pedals. In addition, the arrangement takes up space, and makes inclusion of safety features common for road use difficult.

This invention attempts to address at least some of these problems.

### SUMMARY

A first aspect of the invention provides a control system for use in a vehicle configurable for air use or road use, the vehicle comprising moveable control surfaces for controlling operation of the vehicle in air use, the system comprising:
a pedal arrangement of three pedals, comprising a central brake pedal, and first and second side pedals (e.g a right side pedal and a left side pedal), one on either side of the brake pedal, the pedal arrangement having a first configuration for use when the vehicle is configured for road use, and a second configuration for use when the vehicle is configured for air use; wherein in the first configuration, the first (right) side pedal is configured to act as a throttle control;
and in the second configuration, the first and second pedals are connected to the moveable control surfaces.

The first and second side pedals are typically operable in the second configuration to control the moveable control surfaces to provide yaw control to the vehicle when configured for air use.

The second (left) side pedal can be configured as a static foot rest in the first configuration.

The first and second side pedals can be arranged to pivot about a common axis in at least the second configuration. In this case, the first and second side pedals can be connected to concentrically mounted shafts that are arranged to rotate about the common axis in the second configuration. A first actuator can be mounted on the first shaft and a second actuator can be mounted on the second shaft, the first and second side pedals being connected to the moveable control surfaces via the first and second actuators. Cables can be provided for transmitting movement to the moveable control surfaces, the cables being wrapped around the actuators for transmitting movement of the first and second pedals to the moveable control surfaces

In some embodiments, the pedal arrangement comprises a clutch operable to disconnect the first side pedal from the moveable control surfaces in the first configuration.

The control system can further comprise a common mounting structure for mounting the pedal arrangement in the vehicle. An adjustable connector can be provided for connection between the common mounting structure and an operator seat, the connector being adjustable so as to vary the distance between the common structure and the operator seat, when connected. The adjustable connector can comprise a pair of rails for connection to the operator seat, the common mounting structure including carriers configured to be slideable on the rails, and each carrier including a locking mechanism for locking the slider in position on a respective rail.

A second aspect of the invention provides a vehicle configurable for air or road use, comprising: a body having road wheels for supporting the body when configured for road use; wings connected to the body and deployable for air use; a tail section at the rear of the body; moveable control surfaces for controlling operation of the vehicle in air use; and a control system as claimed in any preceding claim.

An operator seat can be connected to the common mounting structure by means of the adjustable connector.

Further variations can be made within the scope of the invention.

### DRAWINGS

Figure 1 shows a front perspective view of a flying car in a flight configuration;
Figure 2 shows a front perspective view of a flying car in a road use configuration;
Figure 3 shows an internal view of a crew compartment of the flying car of Figures 1 and 2;
Figure 4 shows detail of the mounting of pedals shown in Figure 3;
Figure 5 shows schematically the connection of the pedals to control surfaces.

### DETAILED DESCRIPTION

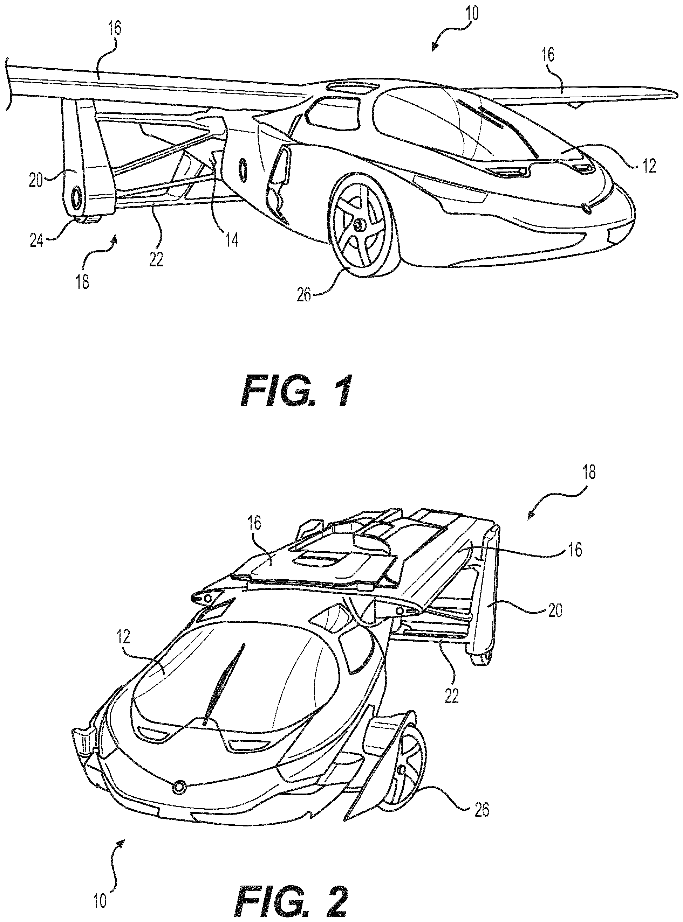

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/032409.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

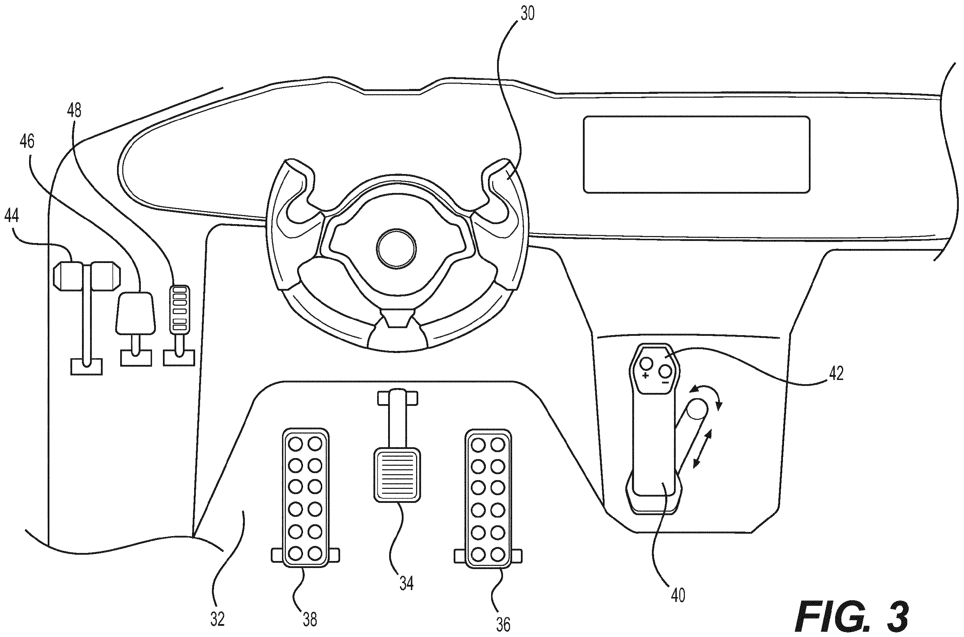

Figure 3 shows a partial view of the crew compartment 12, with the main controls operable by the driver/pilot.

A steering wheel 30 is positioned in a conventional configuration ahead of a driver/pilot seat (not shown). In road use configuration (Figure 2), the steering wheel 30 operates the front wheels 26 in a conventional manner. In flight use (Figure 1), the steering wheel 30 is inactive.

A three pedal arrangement is provided in a foot well 32 below the steering wheel 30. The pedals comprise a central brake pedal 34, and first and second side pedals 36, 38. The brake 34 acts on both the front and rear wheels 24, 26. In a first configuration for road use (Figure 2), the first side pedal 36 is configured as a throttle pedal and operates in the conventional foot-controlled manner to apply power to the driven front wheels 26. In one example, the front wheels are driven by electric motors, the throttle pedal 36 acting to control the current provided to the motors. In this configuration, the second side pedal 38 is fixed in position and acts as a foot rest.

In a second configuration for flight use (Figure 1), the pedals are reconfigured so that the throttle function of the first side pedal 36 is disconnected, and the second side pedal 38 is released from its fixed position. The two side pedals 36, 38 are connected to yaw control surfaces (rudders) on the tail 20, and arranged to operate so that depressing the first (right) side pedal 36 will cause the vehicle to yaw right, and depressing the second (left) side pedal 38 will cause the vehicle to yaw left. The brake pedal 34 can either be inactive, or can remain active for use on the wheels 24, 26 when taxiing while the vehicle is still in flight configuration.

To the right of the steering wheel 30 is a side stick control column 40 which is connected to roll and pitch control surfaces (ailerons and elevators) on the wings 16 and tail 22 for use in flight configuration (Figure 1). Pitch trim control buttons 42 are provided on top of the side stick 40. In road use, the side stick 40 is inactive.

Levers for throttle 44, flap setting 46, and landing gear deployment 48 are located in this example to the left of the steering wheel. It will be appreciated that the levers 44, 46, 48 could also be positioned in other locations, such as on the dashboard ahead of the operator, or to the left and/or right of the steering wheel 30 so as to be within easy reach of the operator. In road use configuration (Figure 2), these are inactive. In air use configuration (Figure 1), these levers operate in a conventional manner on engine flap and landing gear mechanisms.

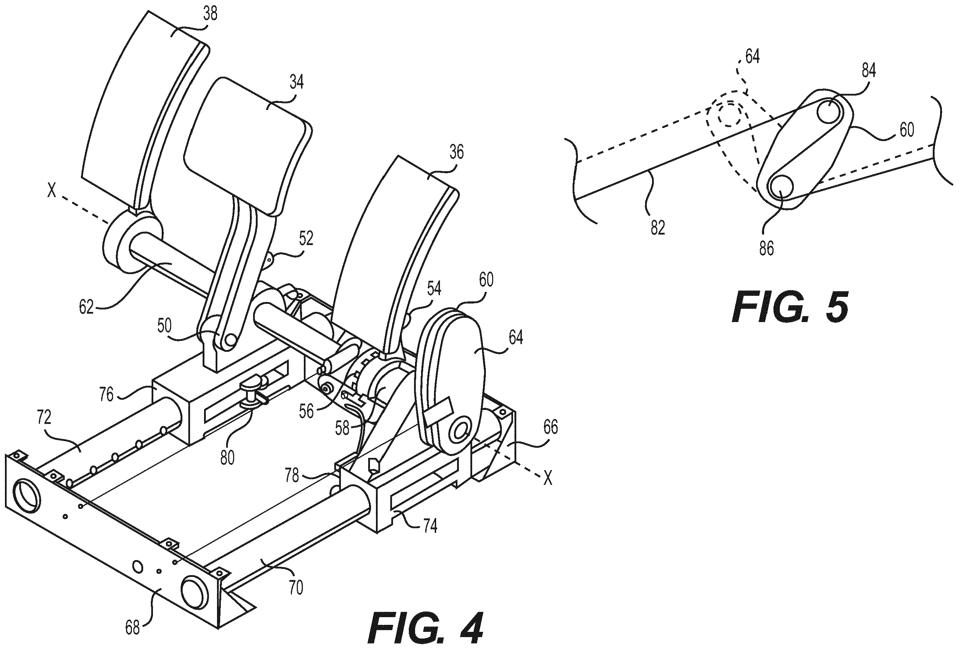

Figure 4 shows further detail of the mounting of the pedals 34, 36, 38, all of which are floor pivoting. The brake pedal 34 is mounted on a lower pivot 50 and has a connection 52 for a braking circuit (not shown). The side pedals 36, 38 are mounted to pivot about a common axis X-X. The first side pedal 36 has a throttle connection 54 and is also connected to a clutch mechanism 56. In the driving configuration, the clutch mechanism is released and the first pedal 36 is free to move independently, affecting only the throttle system (not shown). In a flight configuration, the throttle function is disabled, and the clutch mechanism 56 operated to connect the pedal to an outer tube 58 mounted for rotation around axis X-X. A first control actuator 60 is located on the end of the tube 58 and rotates around the axis X-X on operation of the pedal 36. The second side pedal 38 is mounted on an inner tube 62 that is concentric with the outer tube 58 and having a second control actuator 64 located on the end adjacent the first actuator 60. In the driving configuration, the inner tube 62 is locked in position by the clutch mechanism 56, acting as a foot rest. In a flight configuration, the clutch mechanism 56 releases the pedal 38 to pivot, operation of the pedal 38 rotating the tube 62 and actuator 64.

The pedals 34, 36, 38, clutch mechanism 56, outer and inner tubes 58, 62, and control actuators 60, 64 are all connected to a common mounting structure 66, together defining a "pedal box".

The pedal box is connected to a seat (not shown) by means of a connector 68 having a pair of rails 70, 72 extending therefrom. The mounting structure 66 includes a pair of carriers 74, 76 configures to slide over the rails 70, 72. Each carrier 70, 72 has a locking mechanism 78, 80 by means of which the relative position of the seat and the pedal box can be adjusted and fixed.

The relative position of the pedal box and seat can be adjusted to accommodate the different leg lengths of operators without substantially affecting the center of gravity of the vehicle.

Figure 5 shows a schematic view of the connection of the actuators 60, to a control surface. A cable 82 runs from a position ahead of the pedal box back to the control surface. The actuator 60 has pegs 84, 86 at lower and upper ends thereof, and the cable is wrapped in a Z shape around these pegs. Pressing on first side pedal 36 forces the upper peg 84 forward, pivoting around peg 86, and drawing the rear part of the cable 82 forward and moving the control surface to the right. The second side pedal 38 and actuators 64 are similarly connected and mounted in opposition to the first pedal 36 and actuator 60 such that pressing on the second side pedal 38 draws on its cable, moving the control surface left and pulling the cable 82 and first side pedal 36 back.

Movement of the pedal box backwards and forwards is accommodated by the cable passing around the pegs on the control actuators. As will be appreciated, the overall length of cable remains the same and only the position of the Z wrap around the actuator changing.

Changes can be made while remaining within the scope of the invention. For example, the manner in which the pedal box is connected to the seat can be varied while retaining the functional features of the pedals. Similarly, the manner of connecting the pedals to the control surfaces may be changed to suit requirements.

## Claims

1. A control system for use in a vehicle configurable for air use or road use, the vehicle comprising moveable control surfaces (20, 22) for controlling operation of the vehicle in air use, the system comprising:
a pedal arrangement of three pedals, comprising a central brake pedal (34) and first (36) and second (38) side pedals, one on either side of the central brake pedal, the pedal arrangement having a first configuration for use when the vehicle is configured for road use, and a second configuration for use when the vehicle is configured for air use;
wherein
in the first configuration, the first side pedal (36) is configured to act as a throttle control; and
in the second configuration, the first (36) and second (38) side pedals are connected to the moveable control surfaces (20).

2. A control system as claimed in claim 1, wherein the first (36) and second (38) side pedals are operable in the second configuration to control the moveable control surfaces (20) to provide yaw control to the vehicle when configured for air use.

3. A control system as claimed in claim 1 or 2, wherein the second side pedal (38) is configured as a static foot rest in the first configuration.

4. A control system as claimed in claim 1, 2, or 3, wherein the first (36) and second (38) side pedals are arranged to pivot about a common axis in at least the second configuration.

5. A control system as claimed in claim 4, wherein the first (36) and second (38) side pedals are connected to concentrically mounted first (58) and second (62) shafts that are arranged to rotate about the common axis in the second configuration.

6. A control system as claimed in claim 5, wherein a first actuator (60) is mounted on the first shaft (58) and a second actuator (64) is mounted on the second shaft (62), the first (36) and second (38) side pedals being connected to the moveable control surfaces via the first and second actuators.

7. A control system as claimed in claim 6, further comprising cables (82) for transmitting movement to the moveable control surfaces, the cables being wrapped around the actuators (60, 64) for transmitting movement of the first (36) and second (38) pedals to the moveable control surfaces.

8. A control system as claimed in any preceding claim, wherein the pedal arrangement comprises a clutch mechanism (56) operable to disconnect the first side pedal (36) from the moveable control surfaces in the first configuration.

9. A control system as claimed in any preceding claim, further comprising a common mounting structure (66) for mounting the pedal arrangement in the vehicle.

10. A control system as claimed in claim 9, further comprising an adjustable connector (68) for connection between the common mounting structure (66) and an operator seat, the connector being adjustable so as to vary the distance between the common structure and the operator seat, when connected.

11. A control system as claimed in claim 10, wherein the adjustable connector (68) comprises a pair of rails (70, 72) for connection to the operator seat, the common mounting structure (66) including carriers (74, 76) configured to be slideable on the rails (70, 72), and each carrier including a locking mechanism (78, 80) for locking the slider in position on a respective rail.

12. A vehicle configurable for air or road use, comprising:
a body (10) having road wheels (24, 26) for supporting the body when configured for road use;
wings (16) connected to the body (10) and deployable for air use;
a tail section (18) at the rear of the body (10);
moveable control surfaces (20, 22) for controlling operation of the vehicle in air use; and
a control system as claimed in any preceding claim.

13. A vehicle configurable as claimed in claim 12, comprising a control system as claimed in claim 10 or 11, and further comprising an operator seat connected to the common mounting structure by means of the adjustable connector.

## Patentansprüche

1. Steuersystem zur Verwendung in einem für den Luft- oder Straßenbetrieb konfigurierbaren Fahrzeug, wobei das Fahrzeug bewegliche Steuerflächen (20, 22) zum Steuern des Betriebs des Fahrzeugs im Luftbetrieb umfasst, wobei das System umfasst:
eine Pedalanordnung aus drei Pedalen, die ein zentrales Bremspedal (34) und ein erstes (36) und ein zweites (38) Seitenpedal, eines auf einer jeweiligen Seite des zentralen Bremspedals umfasst, wobei die Pedalanordnung eine erste Konfiguration zur Verwendung aufweist, wenn das Fahrzeug für den Straßenbetrieb konfiguriert ist, und eine zweite Konfiguration zur Verwendung, wenn das Fahrzeug für den Luftbetrieb konfiguriert ist;
wobei in der ersten Konfiguration das erste Seitenpedal (36) konfiguriert ist, um als Drosselklappensteuerung zu wirken;
und in der zweiten Konfiguration das erste (36) und zweite (38) Seitenpedal mit den beweglichen Steuerflächen (20) verbunden sind.

2. Steuersystem gemäß Anspruch 1, wobei das erste (36) und zweite (38) Seitenpedal in der zweiten Konfiguration betreibbar sind, um die beweglichen Steuerflächen (20) zu steuern, um für das Fahrzeug eine Giersteuerung bereitzustellen, wenn es für den Luftbetrieb konfiguriert ist.

3. Steuersystem gemäß Anspruch 1 oder 2, wobei das zweite Seitenpedal (38) in der ersten Konfiguration als statische Fussstütze konfiguriert ist.

4. Steuerungssystem gemäß Anspruch 1, 2 oder 3, wobei das erste (36) und zweite (38) Seitenpedal angeordnet sind, um sich um eine gemeinsame Achse in mindestens der zweiten Konfiguration zu drehen.

5. Steuersystem gemäß Anspruch 4, wobei das erste (36) und zweite (38) Seitenpedal mit konzentrisch montierter erster (58) und zweiter (62) Welle verbunden sind, die angeordnet sind, um in der zweiten Konfiguration um die gemeinsame Achse zu rotieren.

6. Steuersystem gemäß Anspruch 5, wobei ein erstes Stellglied (60) auf der ersten Welle (58) und ein zweites Stellglied (64) auf der zweiten Welle (62) montiert sind, wobei das erste (36) und zweite (38) Seitenpedal über das erste und zweite Stellglied mit den beweglichen Steuerflächen verbunden sind.

7. Steuersystem nach Anspruch 6, ferner umfassend Seilzüge (82) zum Übertragen von Bewegung auf die beweglichen Steuerflächen, wobei die Seilzüge um die Stellglieder (60, 64) gewickelt sind, um die Bewegung des ersten (36) und zweiten (38) Pedals auf die beweglichen Steuerflächen zu übertragen.

8. Steuersystem gemäß einem der vorhergehenden Ansprüche, wobei die Pedalanordnung einen Kupplungsmechanismus (56) umfasst, der betreibbar ist, um das erste Seitenpedal (36) in der ersten Konfiguration von den beweglichen Steuerflächen zu trennen.

9. Steuersystem gemäß einem der vorhergehenden Ansprüche, das ferner eine Montagestruktur (66) zum Montieren der Pedalanordnung in dem Fahrzeug umfasst.

10. Steuersystem gemäß Anspruch 9, das ferner einen einstellbaren Verbinder (68) zur Verbindung zwischen der gemeinsamen Montagestruktur (66) und einem Fahrersitz umfasst, wobei der Verbinder einstellbar ist, um so den Abstand zwischen der gemeinsamen Struktur und dem Fahrersitz zu variieren, wenn er verbunden ist.

11. Steuersystem gemäß Anspruch 10, wobei der verstellbare Verbinder (68) ein Paar Schienen (70, 72) zur Verbindung mit dem Fahrersitz umfasst, wobei die gemeinsame Montagestruktur (66) Träger (74, 76) umfasst, die konfiguriert sind, um auf den Schienen (70, 72) verschiebbar zu sein, und wobei jeder Träger einen Verriegelungsmechanismus (78, 80) zum Verriegeln des Schiebers in Position auf einer entsprechenden Schiene umfasst.

12. Fahrzeug, das für den Einsatz in der Luft oder auf der Straße konfigurierbar ist, das Folgendes umfasst:
eine Karosserie (10) mit Straßenrädern (24, 26) zum Tragen der Karosserie, wenn es für den Straßengebrauch konfiguriert ist;
Flügel (16), die mit der Karosserie (10) verbunden und für den Lufbetrieb einsetzbar sind;
einen Schwanzabschnitt (18) am Heck der Karosserie (10);
bewegliche Steuerflächen (20, 22) zum Steuern des Betriebs des Fahrzeugs bei Luftbetrieb;
und ein Steuersystem gemäß einem der vorhergehenden Ansprüche.

13. Fahrzeug, das gemäß Anspruch 12 konfigurierbar ist, das ein Steuersystem gemäß Anspruch 10 oder 11 und ferner einen Fahrersitz umfasst, der mittels des verstellbaren Verbinders mit der gemeinsamen Montagestruktur verbunden ist.

## Revendications

1. Système de commande destiné à être utilisé dans un véhicule configurable pour une utilisation dans les airs ou sur route, le véhicule comprenant des surfaces de commande mobiles (20, 22) destinées à commander le fonctionnement du véhicule lors d'une utilisation dans les airs, le système comprenant :
un agencement de pédale de trois pédales, comprenant une pédale de frein centrale (34) et des première (36) et seconde (38) pédales latérales, une de chaque côté de la pédale de frein centrale, l'agencement de pédale possédant une première configuration destinée à être utilisée lorsque le véhicule est configuré pour une utilisation sur route, et une seconde configuration destinée à être utilisée lorsque le véhicule est configuré pour une utilisation dans les airs ;
dans la première configuration, ladite première pédale latérale (36) étant configurée pour agir en tant que commande d'accélérateur ;
et dans la seconde configuration, lesdites première (36) et deuxième (38) pédales latérales étant raccordées aux surfaces de commande mobiles (20).

2. Système de commande selon la revendication 1, lesdites première (36) et seconde (38) pédales latérales servant, dans la seconde configuration, à commander les surfaces de commande mobiles (20) afin de fournir une commande de lacet au véhicule lorsqu'il est configuré pour une utilisation dans les airs.

3. Système de commande selon la revendication 1 ou 2, ladite seconde pédale latérale (38) étant configurée en tant que repose-pied statique dans la première configuration.

4. Système de commande selon la revendication 1, 2 ou 3, lesdites première (36) et seconde (38) pédales latérales étant agencées pour pivoter autour d'un axe commun dans au moins la seconde configuration.

5. Système de commande selon la revendication 4, lesdites première (36) et seconde (38) pédales latérales étant raccordées à des premier (58) et second (62) arbres montés concentriquement qui sont agencés pour tourner autour de l'axe commun dans la seconde configuration.

6. Système de commande selon la revendication 5, un premier actionneur (60) étant monté sur le premier arbre (58) et un second actionneur (64) étant monté sur le second arbre (62), les première (36) et seconde (38) pédales latérales étant raccordées aux surfaces de commande mobiles par l'intermédiaire des premier et second actionneurs.

7. Système de commande selon la revendication 6, comprenant en outre des câbles (82) destinés à transmettre un mouvement aux surfaces de commande mobiles, les câbles étant enroulés autour des actionneurs (60, 64) pour transmettre un mouvement des première (36) et seconde (38) pédales aux surfaces de commande mobiles.

8. Système de commande selon l'une quelconque des revendications précédentes, ledit agencement de pédale comprenant un mécanisme d'embrayage (56) servant à désengager la première pédale latérale (36) des surfaces de commande mobiles dans la première configuration.

9. Système de commande selon l'une quelconque des revendications précédentes, comprenant en outre une structure de montage commune (66) destinée à monter l'agencement de pédale dans le véhicule.

10. Système de commande selon la revendication 9, comprenant en outre un raccord réglable (68) pour le raccordement entre la structure de montage commune (66) et un siège d'opérateur, le raccord étant réglable de façon à faire varier la distance entre la structure commune et le siège d'opérateur, une fois raccordé.

11. Système de commande selon la revendication 10, ledit raccord réglable (68) comprenant une paire de rails (70, 72) pour un raccordement au siège d'opérateur, la structure de montage commune (66) comprenant des supports (74, 76) configurés pour pouvoir coulisser sur les rails (70, 72), et chaque support comprenant un mécanisme de verrouillage (78, 80) destiné à verrouiller le coulisseau dans une position sur un rail respectif.

12. Véhicule configurable pour une utilisation dans les airs ou sur route, comprenant :
une carrosserie (10) comportant des roues (24, 26) de route destinées à supporter la carrosserie lorsqu'il est configuré pour une utilisation sur route ;
des ailes (16) raccordées à la carrosserie (10) et déployables pour une utilisation dans les airs ;
une section arrière (18) à l'arrière du corps (10) ;
des surfaces de commande mobiles (20, 22) destinées à commander le fonctionnement du véhicule lors de l'utilisation dans les airs ;
et un système de commande selon une quelconque revendication précédente.

13. Véhicule configurable selon la revendication 12, comprenant un système de commande selon la revendication 10 ou 11, et comprenant en outre un siège d'opérateur raccordé à la structure de montage commune au moyen du raccord réglable.
